# EUROPEAN PATENT APPLICATION

(11) **EP 4 628 362 A1**
(43) Date of publication of application: **08.10.2025**
(21) Application number: 24168156.8
(22) Date of filing: 02.04.2024
(51) Int. Cl.: B60Q 1/068

(54) **ADJUSTMENT DEVICE FOR A MOTOR VEHICLE LAMP MODULE**

(71) Applicant: PO LIGHTING CZECH s.r.o., 742 42 Senov u Nového Jicína (CZ)
(72) Inventor: DRAPALA, Ondrej, 742 42 Senov u Nového Jicína (CZ); KLOS, Jiri, 742 42 Senov u Nového Jicína (CZ); ADAM, Turovsky, 742 42 Senov u Nového Jicína (CZ); GOLIK, Roman, 742 42 Senov u Nového Jicína (CZ)
(74) Representative: LLR

(57) **Abstract**

The invention concerns an adjustment device (20Z, 20Y) for a lamp module (10) including a lighting unit (14). It includes a primary shaft (22Z, 22Y) whose movement is transferred to the lighting unit (14) to make it rotate, and a secondary shaft (32Z, 32Y).

The secondary shaft (32Z, 32Y) is connected to the primary shaft (22Z, 22Y) via a primary bevel gear (34Z, 34Y) and has a proximal end (32ZD, 32YD) comprising a shaft socket (36Z, 36Y) allowing the rotation of said secondary shaft (32Z, 32Y) about its longitudinal axis with the aid of a tool.

The adjustment device further comprises a secondary bevel gear (44Z, 44Y) via which the secondary shaft (32Z, 32Y) is rotatable about its longitudinal axis. One of its gears comprises a bevel socket (46Z, 46Y) allowing for the rotation of the secondary shaft (32Z, 32Y) about its longitudinal axis with the aid of a tool.

## Description

The invention relates to the domain of the automotive industry, and particularly to a motor vehicle lamp. In particular, the invention relates to an adjustment device for a motor vehicle lamp module including a lighting unit.

When mounted on a motor vehicle, the lighting units within lamp modules such as headlamps or rear lamps, need to be adjusted in two directions : in a vertical way, and in a lateral way. In other words, considering an orthogonal coordinate system where the X direction is the direction along which the vehicle is driven on a road, and Z the vertical direction of the vehicle when it is driven on the road, the lighting units must be adjusted about the Z axis (vertically) and about the Y axis of the vehicle (laterally).

However, once mounted and inserted in their housing within the lamp modules, lighting units are usually not easily accessible from the outside of the vehicle. Therefore, to perform such adjustments, lamp modules usually include at least one adjustment devices, for example one for each direction, comprising a rotatable part located outside the housing of the lamp module. To adjust the position of the lighting unit, an operator acts upon the rotatable part using a tool, such as a screwdriver, which in turn acts upon the lighting unit to make it rotate about the desired axis.

An adjustment device of this type is known from EP2682304B1. The adjustment device includes a threaded spindle which can be rotated via a bevel gear located at one of its ends, when an operator acts upon actuating wheel located outside of the lamp module housing using a special tool. At its other end, the threaded spindle is engaged with a spindle nut whose movement is transferred onto an adjustment knob acting upon the lighting unit to make it rotate.

The disadvantage of such an adjustment device is that it can only be reached and operated from one direction, which usually not aligned with the X axis, meaning that the adjustment device is not operable from the front of the car. This heavily limits the possibilities for an operator to position himself to perform the adjustment.

There is therefore a need to provide a greater flexibility in the adjustment process, by making the adjustment device operable in at least two different directions, preferably one of these directions being aligned with the X axis of the vehicle, but without making the adjustment device too costly or complicated.

To that end, the invention comprises an adjustment device for a motor vehicle lamp module including at least one lighting unit, comprising :
- a primary shaft whose movement is transferred to the at least one lighting unit to make it rotate about a direction,
- a secondary shaft extending along a longitudinal axis which is connected to the primary shaft via a primary bevel gear and has a proximal end comprising a shaft socket allowing the rotation of said secondary shaft about said longitudinal axis with the aid of a tool,
**characterized** in that it further comprises a secondary bevel gear, the secondary shaft being rotatable about its longitudinal axis via the secondary bevel gear, one of the gears of the secondary bevel gear comprising a bevel socket allowing for the rotation of the secondary shaft about its longitudinal axis with the aid of a tool.

Owing to the presence of the secondary bevel gear, an operator may act upon the lighting unit via the secondary shaft from another direction than the direction along which the secondary shaft extends. The use of a secondary bevel gear also makes the adjustment device particularly simple, and cheap to manufacture.

In order to easily rotate the secondary shaft about its longitudinal axis, the rotational axis of a first bevel of the secondary bevel gear corresponds to the longitudinal axis of the secondary shaft.

According to a preferred embodiment that is easy to manufacture, the rotational axis of a second bevel of the secondary bevel gear is perpendicular to the axis of the secondary shaft.

According to a preferred embodiment that is easy to manufacture, the primary bevel gear is connected to an end of the primary shaft.

Advantageously, to further facilitate the adjustment by an operator, the primary bevel gear is connected to a distal end of the secondary shaft that is opposite the proximal end.

According to a particular embodiment that is easy to manufacture, the rotational axes of the bevel gears of the primary bevel gear extend at a right angle to each other.

According to a particular embodiment that is easy to manufacture, the rotational axes of the bevel gears of the secondary bevel gear extend at a right angle to each other.

Preferably, to protect the adjustment device whilst making it easily accessible from the outside of the lamp module, the adjustment device further comprises an external housing encasing the secondary shaft, the primary bevel gear and the secondary bevel gear.

The invention also concerns a motor vehicle lamp module comprising an adjustment device according to the invention.

Advantageously, to facilitate access by an operator, the socket of the secondary shaft and/or the socket of one of the gears of the secondary bevel gear are accessible from the outside of a housing of the motor vehicle lamp module.

According to a particular embodiment, the primary shaft is arranged inside a housing of the motor vehicle lamp module housing. This allows to protect the primary shaft without requiring a specific housing.

Advantageously, to facilitate access by an operator, especially from the front of the vehicle, the primary bevel gear and the secondary bevel gear are arranged outside the lamp module housing.

Advantageously, to facilitate the manufacturing of the motor vehicle lamp module and of the adjustment device and thus reduce their cost, an external housing of the adjustment device is made in one piece with the motor vehicle lamp module housing, preferably moulded in one piece with the motor vehicle lamp module housing.

According to a preferred embodiment, the rotation axis of one of the bevel gears of the secondary bevel gear corresponds to a longitudinal axis of the lamp module, corresponding to a longitudinal axis of the motor vehicle.

Preferably, to prevent the secondary bevel gear from falling out of the adjustment device, the adjustment device comprises means for retaining the secondary shaft to the external housing, for example comprising at least one retaining tab arranged at the distal end of the external housing, configured to cooperate with an internal surface of the external housing so as to form a snap-in connection between the secondary shaft and the external housing.

The vehicle lamp module can preferably be a headlamp or a rear lamp.

The invention also concerns a vehicle including a lamp module according to the invention.

### Brief description of the Figures

The invention will be better understood upon reading the following description, which is given only as an example and is made with reference to the attached drawings in which:
- Figure 1 is a perspective view of a vehicle lamp module according to the invention,
- Figure 2 is a back view of the vehicle lamp module of Figure 1,
- Figure 3 is a perspective view of a vehicle lamp module according to Figure 1, in which the vehicle lamp module housing has been removed,
- Figure 4 is a view similar to Figure 3 from another angle,
- Figure 5 is a view of detail V of Figure 2,
- Figure 6 is view similar to Figure 5, in which the external housing of the adjustment device has been removed.

### Detailed Description

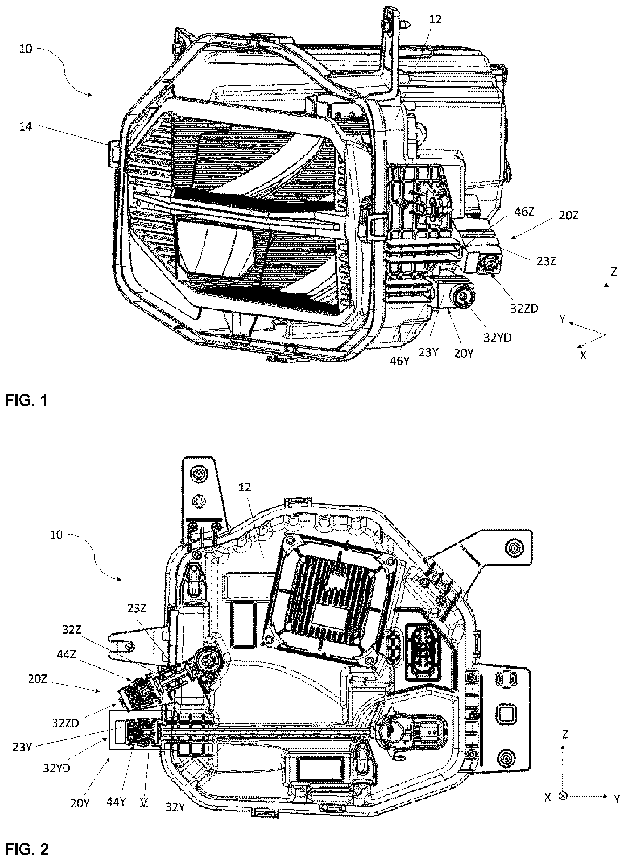

With reference to Figures 1 to 3, a motor vehicle lamp module 10 according to an embodiment of the invention, which is destined to be mounted in a motor vehicle, for example a car. The lamp module 10 comprises a housing 12 in which is housed a lighting unit 14. The lighting unit comprises an array of light sources (not shown) preferably light-emitting diodes (LEDs, not shown). In the embodiment shown on the Figures, the lamp module 10 is a headlamp. It could however also be a rear lamp for instance. The vehicle lamp module 10 could also be mounted on other type of motor vehicles other than cars.

The lighting unit 14 is adjustable in at least one direction. In the present case, considering an orthogonal coordinate system where the X direction is the direction along which the vehicle is driven on a road, and Z the vertical direction of the vehicle when it is driven on the road, said coordinate system being shown on the Figures, the lighting unit 14 is adjustable about two axes Z and Y.

In order to adjust the position of the lighting unit, a first and second adjustment devices 20Z, 20Y according to the invention, one for each axis, are provided. In a variant, the lighting unit 14 could only comprise a single adjustment device 20 to act upon a single adjustment axis. The first adjustment device 20Z allows a rotation of the lighting unit 14 about the Z axis, whilst the second adjustment device 20Y allows a rotation of the lighting unit 14 about the Y axis.

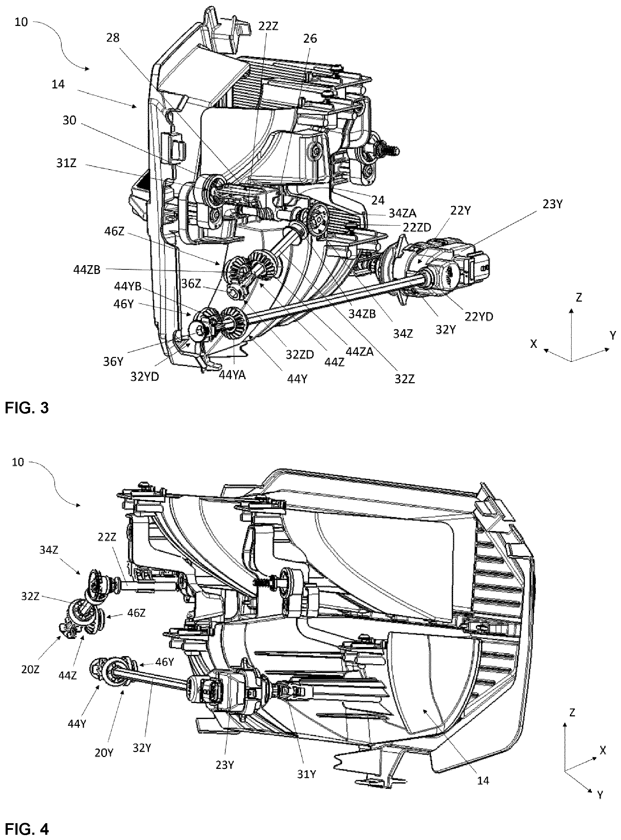

As can be best seen on Figure 3, each of the first 20Z and second 20Y adjustment devices respectively includes a primary shaft 22Z, 22Z whose movement is transferred to the at least one lighting unit 14. It should be noted that the second primary shaft 22Y is hidden of the Figures as it is enclosed within a second external housing 23Y, that is located outside the lighting module housing 14.

The first primary shaft 22Z of the first adjustment device 20Z extends a longitudinal axis that, in the embodiment shown on the Figures, is parallel to the X axis of the vehicle. However, this is just an example and the first primary shaft 22Z of the first adjustment device 20Z could extend along another longitudinal axis.

The second primary shaft 22Y of the second adjustment device 20Y also extends a longitudinal axis that, in the embodiment shown on the Figures, is parallel to the X axis of the vehicle. However, this is just an example and the second primary shaft 22Y of the second adjustment device 20Y could extend along another longitudinal axis.

In the non-limiting example shown on the Figures, first primary shaft 22Z comprises a threaded part 24 (not visible on the Figures) on which is engaged a first end 26 of a slider adjuster 28. The first end 26 of the slider adjuster 28 engages with the threaded part 24 such that when the first primary shaft 22Z is rotated, slider adjuster 28 is displaced along the longitudinal axis of the first primary shaft 22Z, which in this case corresponds to axis X. An opposite end 30 of the slider adjuster 28 includes a driver head 31Z, which acts upon the lighting unit 14, making it pivot about axis Z. For example, the driver head 31Z has the shape of a ball and forms a ball joint link with the lighting unit 14.

As can be seen on Figure 2, first primary shaft 22Z and slider adjuster 28 are contained within the lamp module housing 12.

In the same way the second primary shaft 22Y comprises a threaded part (not visible on the Figures) on which is engaged a first end 26 of a slider adjuster. The first end 26 of the slider adjuster engages with the threaded part such that when the second primary shaft 22Y is rotated, this slider adjuster 28 is displaced along the longitudinal axis of the second primary shaft 22Y, which in this case corresponds to axis X. An opposite end of the slider adjuster includes a driver head 31Y, which acts upon the lighting unit 14, making it pivot about axis Y. For example, the driver head 31Y has the shape of a ball and forms a ball joint link with the lighting unit 14.

However, as can be seen on Figure 2, unlike the first adjustment device 20Z, the second primary shaft 22Y and the slider adjuster 28 are not contained within the enclosure of the lamp module housing 12 but enclosed within the second external housing 23Y.

The first and second adjustment devices 20Z, 20Y respectively comprise a first secondary shaft 32Z and a second secondary shaft 32Y.

In the embodiment shown on the Figures, the second secondary shaft 32Y extends along a longitudinal axis that is parallel to the axis Y. However, other arrangements are possible depending on the mounting requirements. The first secondary shaft 32Z extends along a longitudinal axis that forms an angle of approximately 45° with the longitudinal axis of the second secondary shaft 32Y and with axis Y. However, this is just a preferred example, and other arrangements, especially other angles, are possible. The first and second secondary shafts 32Y, 32Z can for any angle, and can be placed around a 360° perimeter.

For example, according to a particular embodiment that is not shown on the Figures, the longitudinal axes of the first and second secondary shafts 32Z, 32Y could be parallel. In particular, the longitudinal axes of the first and second secondary shafts 32Z, 32Y could be parallel to the axis Y, or, in yet another variant, to the axis Z.

The first and second secondary shafts 32Z, 32Y are respectively connected to the first primary shaft 22Z and the second primary shaft 22Y, via a first primary bevel gear 34Z and a second primary bevel gear 34Y. The first and second primary bevel gears 34Z, 34Y are respectively connected to ends of the first and second primary shafts 22Z, 22Y or distal ends 22ZD, 22YD.

As can be seen on Figure 2, the first primary bevel gear 34Z is contained within the lamp module housing 12. On the other hand, the second primary bevel gear 34Y is contained within the second external housing 23Y.

The first and second primary bevel gears 34Z, 34Y are also respectively connected to ends of the first and second secondary shafts 32Z, 32Y or proximal ends 32ZP, 32YP, that are opposite the distal ends 32ZD, 32YD of the secondary shafts 32Z, 32Y which comprise respective shaft sockets 36Z, 36Y allowing for the rotation of the secondary shaft 32Z, 23Y about their respective longitudinal axes with the aid of a tool.

To that end, the shaft sockets 36Z, 36Y may have, for example, the shape of a hexagon. However, it should be noted that the sockets 36Z, 36Y may have various shapes such as a cross shape, a star shape, etc. It should also be noted that the first and second shaft sockets 36Z, 36Y may have shapes that are different from one another.

The first and second shaft sockets 36Z, 36Y of the secondary shafts 32Z, 32Y are accessible from the outside of the housing 12 of the lamp module 10. Hence, an operator can easily insert the tool in the shaft sockets 36Z, 36Y to make the secondary shaft 32Z, 32Y about their respective longitudinal axes.

First and second primary bevel gears 34Z, 34Y comprise first bevels 34ZA, 34ZB and second bevel 34YA, 34YB.

In the embodiment shown on the Figures, the rotational axes of gears 34ZA, 34ZB of the first primary bevel gear 34Z extend at a right angle to each other, such that first primary shaft 22Z and first secondary shaft 32Z also extend at right angles to each other. However, other angles could be considered, depending on the mounting requirements. In the same way, in the embodiment shown on the Figures, the rotational axes of gears 34YA, 34YB of the second primary bevel gear 34Y extend at a right angle to each other, such that second primary shaft 22Y and second secondary shaft 32Y also extend at right angles to each other. However, other angles could be considered, depending on the mounting requirements.

First and second adjustment device 20Z, 20Y also each respectively comprise a first and second secondary bevel gears 44Z, 44Y. The first secondary bevel gear 44Z comprises a first bevel 44ZA and a second bevel 44ZB. The second secondary bevel gear 44Y also comprises a first bevel 44YA and a second bevel 44YB.

In both the first and second adjustment devices 20Z, 20Y, the rotational axes of the secondary bevel gears 44ZA, 44ZB and 44YA and 44YB respectively extend at a right angle to each other. However, other angles could be used.

According to the particular embodiment shown on the Figures, the rotational axis of the first bevel 44ZA of the first secondary bevel gear 44Z corresponds to the longitudinal axis of the first secondary shaft 32Z. In the same way, the axis of rotation of the first bevel 44YA of the second secondary bevel gear 44Y corresponds to the longitudinal axis of the second secondary shaft 32Y.

The rotational axis of the second bevel 44ZB of the first secondary bevel gear 44Z is perpendicular to the axis of the first secondary shaft 32Z. In the same way, the rotational axis of the second bevel 44YB of the second secondary bevel gear 44Y is perpendicular to the axis of the second secondary shaft 32Y.

The first secondary shaft 32Z is rotatable about its longitudinal axis via the first secondary bevel gear 44Z. To that end, the second bevel 44ZB of the first secondary bevel gear 44Z comprises a bevel socket 46Z allowing for the rotation of the first secondary shaft 32Z about its longitudinal axis with the aid of a tool.

In the same way, the second secondary shaft 32Y is rotatable about its longitudinal axis via the second secondary bevel gear 44Y, thanks to the second bevel 44YB of the secondary bevel gear 44Y comprising a bevel socket 46Y allowing for the rotation of the second secondary shaft 32Y about its longitudinal axis with the aid of a tool.

The bevel sockets 46Z, 46Y may have, for example, the shape of a hexagon. However, it should be noted that the sockets 46Z, 46Y may have various shapes such as a cross shape, a star shape, etc. It should also be noted that the first and second shaft sockets 46Z, 46Y may have shapes that are different from one another.

The bevel sockets 46Z, 46Y are accessible from the outside of the housing 12 of the lamp module 10.

As can be seen on Figure 2, for both first and second adjustment devices 20Z, 20Y, the secondary shafts 32Z, 32Y, the primary bevel gears 34Z, 34Y and the secondary bevel gears 44Z, 44Y are all arranged outside the lamp module housing 12. They are contained in respective external housings 23Z, 23Y.

As mentioned earlier, the external housing 23Y of the second adjustment device 20Y also encases the second primary shaft 22Y and the slider adjuster.

Preferably, the external housings 23Z, 23Y of both the adjustment devices 20Z, 20Y, are made in one piece with the motor vehicle lamp module housing 12. Even more preferably, they are moulded in one piece with the motor vehicle lamp module housing 12.

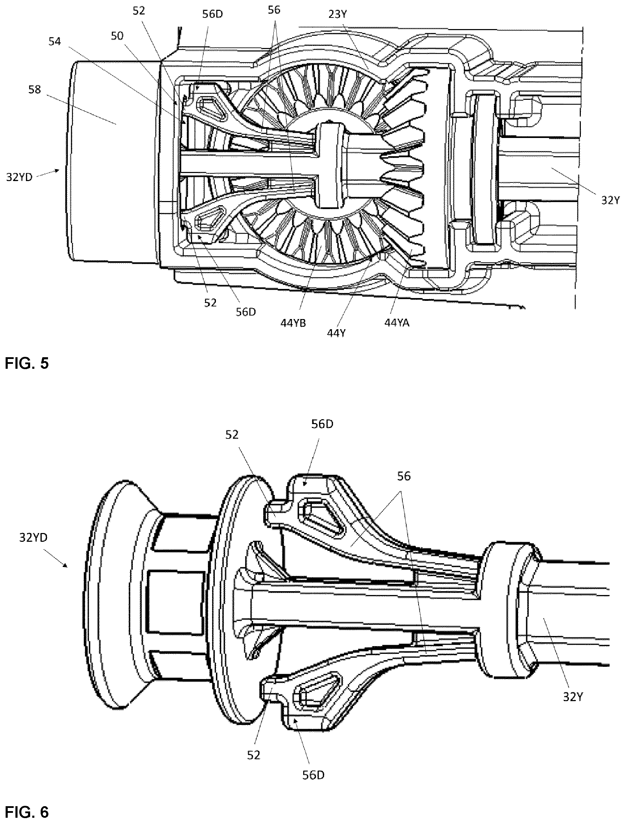

Referring to Figures 5 and 6, the adjustment device 10 comprises means 50 for retaining the second secondary shaft 32Y to the second external housing 23Y.

In particular, the second secondary shaft 32Y comprises, at its distal end 32YD, at least one retaining tab 52 configured to cooperate with an internal surface 54 of the second external housing 23Y so as to form a snap-in connection between the second secondary shaft 32Y and the second external housing 23Y.

To be more precise, the distal end 32YD comprises two branches 56 that branch off from the second secondary shaft 32Y. The branches 56 preferably are made of one piece with the rest of the second secondary shaft 32Y.

The branches 56 are preferably arranged in a symmetrical way with respect to the longitudinal axis of the second secondary shaft 32Y. The branches 56 form an acute angle with the longitudinal axis of the second secondary shaft 32Y. The branches 56 are located between the second secondary gear 44YA and the second shaft socket 36Y.

The retaining protrusions 52 each extend from a distal end 56D of a branch 56 that is the furthest of second secondary shaft 32Y. The retaining protrusions 52 are located between the second secondary gear 44YA and the second shaft socket 36Y. The retaining protrusions 52 preferably are made of one piece with branches 56, and therefore with the rest of the second secondary shaft 32Y.

The retaining protrusions 52 each cooperate with the internal surface 54 of a sleeve 58 of the second external housing 23Y that houses the very end of the distal end 32YD of the second secondary shaft 32Y, which, in this example, houses the second shaft socket 36Y.

The retaining protrusions 52 are inserted in the sleeve 58 so as to form a snap-in connection between the second secondary shaft 32Y and the second external housing 23Y. This can be facilitated by the fact that both the second secondary shaft 32Y and the second external housing 23Y are made of plastic.

It should be noted that the second secondary shaft 32Y could include either a single branch 56 and retaining tab 54, or three or more branches 56 and retaining protrusions 54. Preferably the second secondary shaft 32Y includes either two or four branches 56 and retaining protrusions 54 that are arranged symmetrically about the longitudinal axis of the second secondary shaft 32Y to evenly distribute the forces of the snap-in connection about said longitudinal axis.

The invention is not limited to the presented embodiments and other embodiments will clearly appear to the skilled person. Any combination of the aforementioned embodiments or variants is for example explicitly envisioned.

### References list:

10 : Vehicle lamp module
12 : Lamp module housing
14 : Lighting unit
20Z : First Adjustment device
20Y : Second Adjustment device
22Z : First primary shaft
22ZD : Distal end of the first primary shaft
22Y : Second primary shaft
22ZD : Distal end of the second primary shaft
23Z : First external housing
23Y : Second external housing
24 : Threaded part
26 : First end of the slider adjuster
28 : Slider adjuster
30 : Second end of the slider adjuster
31Z : First driver head
31Y : Second driver head
32Z : First secondary shaft
32ZD : Distal end of the first secondary shaft
32ZP : Proximal end of the first secondary shaft
32Y : Second secondary shaft
32YD : Distal end of the second secondary shaft
32YP : Proximal end of the second secondary shaft
34Z : First primary bevel gear
34ZA : First gear of the first primary bevel gear
34ZB : Second gear of the first primary bevel gear
34Y : Second primary bevel gear
36Z : First shaft socket
36Y : Second shaft socket
44Z : First secondary bevel gear
44ZA : First gear of the first secondary bevel gear
44ZB : Second gear of the first secondary bevel gear
44Y : Second secondary bevel gear
44YA : First gear of the second secondary bevel gear
44YB : Second gear of the second secondary bevel gear
46Z : First bevel socket
46Y : Second bevel socket
50 : Retaining means
52 : Retaining protrusions
54 : Internal surface of the sleeve
56 : Branch of the shaft
56D : Distal end of the branch
58 : Sleeve of the external housing
X : Longitudinal axis of the vehicle
Z : Vertical axis of the vehicle
Y : Lateral axis of the vehicle

## Claims

1. An adjustment device (20Z, 20Y) for a motor vehicle lamp module (10) including at least one lighting unit (14), comprising:
- a primary shaft (22Z, 22Y) whose movement is transferred to the at least one lighting unit (14) to make it rotate about a direction,
- a secondary shaft (32Z, 32Y) extending along a longitudinal axis which is connected to the primary shaft (22Z, 22Y) via a primary bevel gear (34Z, 34Y) and has a proximal end (32ZD, 32YD) comprising a shaft socket (36Z, 36Y) allowing the rotation of said secondary shaft (32Z, 32Y) about said longitudinal axis with the aid of a tool,
**characterized in that** it further comprises a secondary bevel gear (44Z, 44Y), the secondary shaft (32Z, 32Y) being rotatable about its longitudinal axis via the secondary bevel gear (44Z, 44Y), one of the gears (44ZB, 44YB) of the secondary bevel gear (44Z, 44Y) comprising a bevel socket (46Z, 46Y) allowing for the rotation of the secondary shaft (32Z, 32Y) about its longitudinal axis with the aid of a tool.

2. The adjustment device (20Z, 20Y) according to claim 1, **characterized in that** the rotational axis of a first bevel (44ZA, 44YA) of the secondary bevel gear (44Z, 44Y) corresponds to the longitudinal axis of the secondary shaft (32Z, 32Y).

3. The adjustment device (20Z, 20Y) according to claim 2, **characterized in that** the rotational axis of the second bevel (44ZB, 44YB) of the secondary bevel gear (44Z, 44Y) is perpendicular to the axis of the secondary shaft (32Z, 32Y).

4. The adjustment device (20Z, 20Y) according to any one of the preceding claims, **characterized in that** the primary bevel gear (34Z, 34Y) is connected to an end of the primary shaft.

5. The adjustment device (20Z, 20Y) according to any one of the preceding claims, **characterized in that** the primary bevel gear (34Z, 34Y) is connected to a distal end (32ZP, 32YP) of the secondary shaft (32Z, 32Y) that is opposite the proximal end (32ZD, 32YD).

6. The adjustment device (20Z, 20Y) according to any one of the preceding claims, **characterized in that** the rotational axes of the bevel gears (34ZA, 34ZB, 34YA, 34YB) of the primary bevel gear (34Z, 34Y) extend at a right angle to each other.

7. The adjustment device (20Z, 20Y) according to any one of the preceding claims, **characterized in that** the rotational axes of the bevel gears (44ZA, 44ZB, 44YA, 44YB) of the secondary bevel gear (44Z, 44Y) extend at a right angle to each other.

8. The adjustment device (20Z, 20Y) according to any one of the preceding claims, **characterized in that** it further comprises an external housing (23Z, 23Y) encasing the secondary shaft (32Z, 32Y), the primary bevel gear (34Z, 34Y) and the secondary bevel gear (44Z, 44Y).

9. The adjustment device (20Z, 20Y) according to claim 8, **characterized in that** it comprises means (50) for retaining the secondary shaft (32Z, 32Y) to the external housing (23Z, 23Y), for example comprising at least one retaining tab (52) arranged at the distal end (32ZD, 32YD) of the external housing (23Z, 23Y), configured to cooperate with an internal surface (54) of the external housing (23Z, 23Y) so as to form a snap-in connection between the secondary shaft (32Z, 32Y) and the external housing (23Z, 23Y).

10. A motor vehicle lamp module (10) comprising a mechanical adjusting device (20Z, 20Y) according to any one of the preceding claims.

11. The motor vehicle lamp module (10) according to claim 10, **characterized in that** the socket (36Z, 36Y) of the secondary shaft (32Z, 32Y) and/or the socket (46Z, 46Y) of one of the gears of the secondary bevel gear (44Z, 44Y) are accessible from the outside of a housing (12) of the motor vehicle lamp module (10).

12. The motor vehicle lamp module (10) according to claim 10 or 11, **characterized in that** the primary shaft (22Z, 22Y) is arranged inside a housing (12) of the motor vehicle lamp module housing.

13. The motor vehicle lamp module (10) according to any one of claims 10 to 12, **characterized in that** the secondary shaft (32Z, 32Y), the primary bevel gear (34Z, 34Y) and the secondary bevel gear (44Z, 44Y) are arranged outside the lamp module housing (12).

14. The motor vehicle lamp module (10) according to any one of claims 10 to 13, **characterized in that** it comprises an external housing (23Z, 23Y) of the adjustment device, said external housing (23Z, 23Y) of the adjustment device being made in one piece with the motor vehicle lamp module housing (12), preferably moulded in one piece with the motor vehicle lamp module housing (12).

15. The motor vehicle lamp module (10) according to any one of claims 10 to 14, **characterized in that** the rotation axis of one of the bevel gears of the secondary bevel gear corresponds to a longitudinal axis of the lamp module, corresponding to a longitudinal axis of the motor vehicle.
